# EUROPÄISCHE PATENTSCHRIFT

(11) **EP 0 409 021 B1**
(45) Veröffentlichungstag und Bekanntmachung des Hinweises auf die Patenterteilung: **19.02.1997**
(21) Anmeldenummer: 90113004.7
(22) Anmeldetag: 07.07.1990
(51) Int. Cl.: B29C 53/50

(54) **Vorrichtung und Verfahren zur Herstellung von Rohrkörpern**
Apparatus and method for producing tubular articles
Appareil et procédé pour la fabrication de corps tubulaires

(30) Priorität: 21.07.1989 CH 2721/89; 21.07.1989 CH 2722/89; 21.07.1989 CH 2723/89
(43) Veröffentlichungstag der Anmeldung: 23.01.1991
(73) Patentinhaber: KMK LIZENCE LTD., Chaussée, Port Louis (MU)
(72) Erfinder: Scheifele, Freddy, CH-8340 Hinwil (CH); Burger, Hans, CH-8330 Pfaffikon (CH)
(74) Vertreter: Hiebsch, Gerhard F., Dipl.-Ing.

(56) Entgegenhaltungen:
- EP-A- 0 058 245
- EP-A- 0 264 663
- CH-A- 614 660
- DE-C- 970 084
- FR-A- 895 084
- FR-A- 1 063 533
- FR-A- 2 388 662
- GB-A- 1 220 099
- GB-A- 2 154 973
- US-A- 2 451 728
- US-A- 2 741 296
- US-A- 3 388 017
- US-A- 3 537 573
- US-A- 3 638 781
- US-A- 4 629 062

## Beschreibung

Die Erfindung betrifft eine Vorrichtung und ein Verfahren zur Herstellung von Rohrkörpern, insbesondere für Verpackungstuben aus einem aus schweißbarem Kunststoff bestehenden Folienband, nach dem jeweiligen Oberbegriff der Patentansprüche 1 und 15.

Aus der US-PS 33 88 017 ist eine Vorrichtung zur Herstellung von Rohrkörpern aus einem thermoplastischen Bandmaterial bekannt, bei der das Bandmaterial von unten von einem eine geringere Breite als das Bandmaterial aufweisenden angetriebenen Förderriemen unterlagert und mit ihm gemeinsam in eine geteilte, oben offene Formmuffe eingeführt wird.

Ferner sind zwei angetriebene Transportbänder vorgesehen, wovon eines in Nuten eines Dornes geführt und das andere so angeordnet ist, daß durch beide Transportbänder die Überlappungsstelle des Rohrbandes während des Durchganges durch den aus der Formmuffe gebildeten Formkörper druckbeaufschlagt geklemmt geführt wird.

Die Wärmeübertragung beim Nahtschweißen erfolgt durch Kontaktwärme, welche von Heiz- und nachgeordneten Kühlkörpern über ein Transportband auf die Folie gebracht bzw. von dieser abgeleitet wird. Als Nachteil wird bei dieser bekannten Vorrichtung empfunden, daß in dem Formkörper nicht kontrollierbare Reibungskräfte auftreten, die häufig zu Relativbewegungen zwischen den Transportbändern und bereits erweichter Naht und damit aus einem schlechten Erscheinungsbild der Naht zu nicht verwertbaren Rohrkörpern führen.

Nach der bekannten Ausführungsform wirkt ein Transportband sowohl mit der Schweiß- als auch der Kühlzone zusammen. Da das Transportband den Zonen entsprechend verschiedene Wärmeinhalte hat, verschlechtert sich im Falle von Relativbewegungen die Qualität von Schweißnähten deutlicher als wenn ein erstes Transportband nur mit der Schweißzone und ein zweites mit der Kühlzone zusammenwirken würde. Im übrigen steht ein einteiliges oberes Transportband unter höherer thermischer Belastung als ein zweiteiliges, was bezüglich eines Synchronlaufes zwischen oberen und unteren Transportbändern als nachteilig angesehen wird.

Die der Ausführungsform nach der US-PS 33 88 017 sonst anhaftenden Mängel in Verbindung mit nach Meinung der Fachwelt einteiligen oberen Transportbändern anhaftenden technischen Beschränkungen haben zu zwei Entwicklungsrichtungen für Vorrichtungen für den hier in Rede stehenden Zweck geführt.

Aus der CH-PS 61 46 60 ist eine Anlage zur Herstellung verformbarer Rohrkörper aus thermoplastischem Folienband bekannt, wobei das Folienband eine mindestens dreischichtige Metall/Kunststoff-Verbundfolie, eine sogenannte Monofolie, sein kann. Ähnlich wie bei der Ausführungsform nach der US-PS 33 88 017 wird der Rohrkörper in einer stationären Formvorrichtung bestehend aus einer Formmuffe mit Einlauftrichter und Formmuffe und Einlauftrichter durchgreifenden Dorn in schleifender Berührung des Folienbandes mit den Bestandteilen der Formvorrichtung gebildet. Das in der Formvorrichtung gebildete Rohr wird vermittels eines oberen, angetriebenen Transportbandes und eines unteren in einem Dorn frei laufenden Transportbandes in Achsrichtung des Dornes bewegt. Das obere angetriebene Transportband wirkt mit einer Heiz- und Preßvorrichtung zusammen, die die überlappenden Ränder der Folie aufheizen und verpressen, während die Kühlung direkt, d.h. ohne Verwendung eines Kühlbandes, erfolgt.

Im Falle der Herstellung von Rohrkörpern aus Verbundfolien soll die Aufheizung vorzugsweise durch Hochfrequenz, bei Monofolien durch Ultraschall, erfolgen.

Da eine Formvorrichtung vorgesehen ist, treten wie in der Formvorrichtung nach der US-PS 33 88 017 Reibungskräfte auf, die zu Relativbewegungen zwischen Naht und den Transportbändern mit den bekannten Nachteilen führen. Das einteilige obere, nur mit der Heiz-und Preßeinrichtung zusammenwirkende Transportband, vermindert aufgrund seines relativ gleichförmigen Wärmeinhaltes die Nachteile der Vorrichtung nach der US-PS 33 88 017 etwas, beseitigt sie jedoch nicht.

Eine andere Entwicklungsrichtung darstellende Vorrichtung zur Herstellung von Rohrkörpern ist aus der europäischen Patentanmeldung No. 02 64 663 bekannt. Der Vorrichtung wird ein Folienband zugeführt, das eine in mindestens zwei Kunststoffschichten eingebettete Aluminiumschicht umfaßt. In der Vorrichtung wird das Folienband vermittels eines Formriemens, der mit Führungselementen zusammenwirkt, zu einem Rohr mit überlappenden Enden um einen Dorn aufgerollt. Die aus dem beschriebenen Stand der Technik bekannten stationären Formvorrichtungen, sind hier durch einen laufenden Formriemen auf dem die Folie während der Verformung frei jeder Bewegung zwischen Formriemen und Folie und damit reibungsfrei aufliegt, ersetzt.

Die überlappenden Enden gelangen zwischen ein unteres, auf dem Dorn laufendes, angetriebenes Transportband und zwei einander nachgeordnete obere, angetriebene Transportbänder, wobei vermittels des ersten Transportbandes die Verschweißung durch Hitze und Druck und die Kühlung der Schweißnaht durch das zweite nachgeordnete Transportband erfolgt.

Die zur Verschweißung notwendige Erwärmung der Kunststoffschichten wird dadurch erzeugt, daß die metallische Schicht induktiv während des Zusammenpressens der Ränder durch Hochfrequenz erwärmt wird, die Schweißwärme also direkt in der Folie entsteht. Durch die Verwendung eines zweiteiligen oberen Transportbandes kann die Schweißnaht auch während der Kühlung durch Einwirken äußerer Kräfte geformt werden, ohne daß, wie bei einem einteiligen, die Schweiß- und Kühleinrichtung unterfahrenden Transportband, die höhere thermische Belastung mit ihren bekannten Auswirkungen bezüglich des Synchronlaufes hingenommen werden muß.

Als Nachteil hat sich bei dieser Ausführungsform herausgestellt, daß mit ihr Monofolien -- die Bezeichnung Monofolien schließt auch mehrlagige Kunststoffolien ein, bei denen beispielsweise eine gasdichte Kunststofflage zwischen zwei nicht gasdichten Lagen z.B. aus Polyäthylen eingebettet ist -- nicht in der erforderlichen Güte verschweißt werden können. Die erforderliche Güte wird weder durch die Aufheizung der Transportbänder durch induktive Aufheizung mit Wärmeabgabe an die Monofolie noch durch die Anwendung von Ultraschall zur Aufheizung der Folie erreicht.

Ferner ist aus der GB PS 1 220 099 eine Vorrichtung, umfassend ein oberes und unteres Transportband bekannt, bei der das Transportband eine Heiz- und Kühleinrichtung unterfährt, das untere Transportband in Längsrichtung um einen Dorn umläuft, ein Formriemen zur Rohrbildung um den Dorn bestimmt ist und die Längsnahtbildung zwischen den Transportbändern erfolgt. Die Längsnahtschweissung erfolgt bei der bekannten Vorrichtung durch die aufschmelzende und verpressende Heizeinrichtung und die kühlende und gleichzeitig zur Nahtformgebung pressende Kühleinrichtung. Bei dieser Art Längsnahtschweissung bleiben die beidseitigen Randbereiche der Längsnaht durch ungenügende Kühlung länger weich als die Naht selbst, so dass im Randbereich Naht und restliches Tubenrohr trennende Längsrisse entstehen.

Ausgehend von diesem Stand der Technik hat sich der Erfinder die Aufgabe gestellt, unter Vermeidung der den bekannten Vorrichtungen anhaftenden Nachteilen, eine Vorrichtung und ein Verfahren zur Herstellung zusammendrückbarer Rohrkörper aus Monofolien zu schaffen, mit denen die Nachteile der bekannten Vorrichtungen und Verfahren vermieden sind.

Diese Aufgabe wird erfindungsgemäß durch den Gegenstand der Ansprüche 1 und 15 gelöst. Bezüglich weiterer Merkmale und Ausgestaltungen der Erfindung wird auf die Unteransprüche Bezug genommen.

Im Gegensatz zu den bekannten Vorrichtungen zur Verschweißung von Verbundfolien mittels Hochfrequenz, bei denen die Schmelzwärme überwiegend in der Verbundfolie selbst entsteht, werden bei der erfindungsgemäßen Vorrichtung die Transportbänder mittels Hochfrequenz aufgeheizt, die ihrerseits die Wärme zur Aufschmelzung des Kunststoffes an die Kunststoffolie abgeben. Bei dieser Ausgestaltung hat sich überraschenderweise gezeigt, daß damit Monofolien verschweißbar werden, wobei die Schweißnähte eine sehr gute Qualität aufweisen. Ferner war überraschend, daß die thermische Belastung des erfindungsgemäß ungeteilten, die Aufheizeinrichtung, Druckeinrichtung und Kühleinrichtung unterfahrenden Transportbandes deutlich geringer ist als bei einem geteilten Transportband, das bei gleichen Betriebsparametern zur Verschweißung von Verbundfolien eingesetzt ist. Damit wurden keine weiteren Mittel als die erfindungsgemäß vorgeschlagenen zur Sicherung des Synchronlaufes der beiden Transportbänder und des Formriemens notwendig.

Mit der erfindungsgemäßen Ausgestaltung der Vorrichtung lassen sich mit hoher Vorschubgeschwindigkeit Rohrkörper aus Monofolien mit Schweißnähten sehr guter Qualität herstellen.

Das von dieser Erfindung erfaßte Verfahren zur Herstellung von Rohrkörpern aus Monofolie soll es ermöglichen, Rohrkörper mit gleicher Schweißnahtgüte und Fertigungsgeschwindigkeit herzustellen. Dazu wird das Folienband (Monofolienband) zur Bildung einer Schweißnaht in seiner Längsrichtung zu einem Rohr mit aus den Folienrändern gebildeten Überlappung geformt und die Überlappung mit ihrer äußeren und inneren Rohrseite zueinander endlos umlaufenden und angetriebenen Transportbändern gebildeten Bandspalt eingebracht, darin mindestens bis zur Bildung fließfähiger Phasen aufgeschmolzen unter Vorerstarrung der fließfähigen Phasen verpreßt und anschließend unter Druck gekühlt.

Bezüglich weiterer Merkmale und Ausgestaltungen des Verfahrens wird auf die Unteransprüche 16 bis 18 Bezug genommen.

Mit diesem Verfahren ist es nunmehr möglich geworden, Rohrkörper aus Monofolien mit der gleichen Fertigungssicherheit und Fertigungsgeschwindigkeit wie Rohrkörper aus Verbundfolien herzustellen.

Weitere Vorteile, Merkmale und Einzelheiten der Erfindung ergeben sich aus der nachfolgenden Beschreibung eines bevorzugten Ausführungsbeispieles sowie anhand der Zeichnungen. Es zeigen
- Fig. 1:: Eine Vorrichtung zur Herstellung von Rohrkörpern für Verpackungstuben in einer schematischen Seitenansicht;
- Fig. 2:: einen Ausschnitt aus Fig. 1 in einem größeren Maßstab gegenüber Fig. 1;
- Fig. 3: einen Schnitt durch ein Formelement etwa nach Linie III - III in Fig. 2;
- Fig. 4:: den vergrößerten Schnitt durch einen Teil der Vorrichtung zum Positionieren und Verpressen einer Kunststoff-Folie auf einem Dorn.

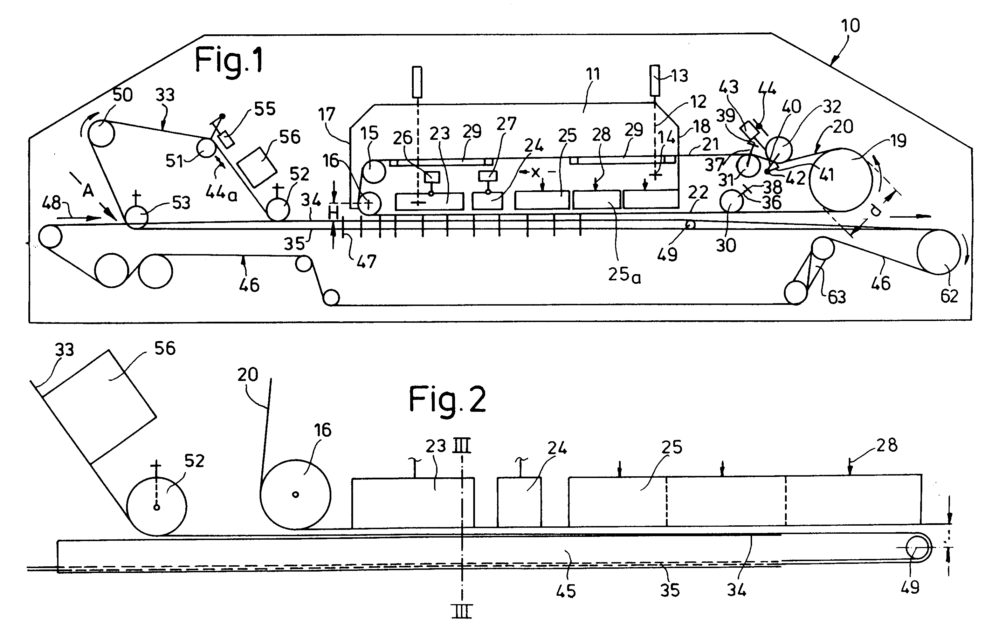

Die in Fig. 1 gezeigte erfindungsgemäße Vorrichtung zur Herstellung rohrförmiger Körper besteht aus einer Grundplatte 10, an der eine Tragplatte 11 in senkrechter Richtung beweglich angelenkt ist. Die bewegliche Anlenkung erfolgt über Stellglieder 12, die zwischen der Grundplatte 10 und Tragplatte 11 angeordnet sind. Letztere ist vermittels der Stellglieder 12 in ihrer Stellung vertikal positionier- und festlegbar.

Bei den schematisch dargestellten Stellgliedern 12 handelt es sich bevorzugt um pneumatisch aktivierbare Stellglieder, deren obere Enden 13, ein Kolbengehäuse, jeweils an der Grundplatte 10 befestigt sind, während ihre unteren Enden 14, jeweils das freie Ende der Kolbenstangen, mit der Tragplatte 11 in Eingriff stehen.

Die Tragplatte 11 trägt am unteren Ende ihrer Vorderkante 17 eine frei drehbar gelagerte Rolle 16 und in Abstand darüber eine gleichermaßen ausgestaltete Rolle 15, deren Achslagen nicht veränderbar sind.

In Abstand zur hinteren Kante 18 der Tragplatte 11 ist eine Antriebsrolle 19 an der Grundplatte 10 angeordnet, deren Durchmesser d der Summe des Achsabstandes der Rollen 15 und 16 sowie der halben Durchmesser dieser Rollen 15 und 16 entspricht.

Um die Antriebsrolle 19 und die Rollen 15, 16 läuft ein endloses metallisches Transportband 20 mit einem Obertrum 21 und einem Untertrum 22, die aufgrund des Durchmessers d der Antriebsrolle 19 und Bemessung sowie Positionierung der oberen Rolle 15 und der unteren Rolle 16 zueinander parallel verlaufen.

Die Abstände der oberen Rolle 15 und unteren Rolle 16 von der Tragplatte 11 sowie der Abstand der Antriebsrolle 19 von der Grundplatte 10 sind so bemessen, daß sich das Transportband 20 in gleichmäßigem Abstand von und vor der Oberfläche der Tragplatte 11 bewegt, wobei mit vorderer Oberfläche die Fläche der Tragplatte 11 bezeichnet ist, die der die Anlenkungen der unteren freien Enden 14 der Stellglieder 12 tragenden Oberfläche der Tragplatte 11 gegenüberliegt.

Zwischen Obertrum 21 und Untertrum 22 sowie mit dessen Innenseite zusammenwirkend, sind an der Tragplatte 11 -- in Bewegungsrichtung des Transportbandes 20 nach der unteren Rolle 16 -- an der Tragplatte 11 nacheinander eine Aufheizeinrichtung 23, eine Druckeinrichtung 24 und eine Kühleinrichtung 25 in vertikaler Richtung bewegbar angeordnet sowie schienenförmig ausgebildet.

Zum Zwecke der vertikalen Verstellung ist die Aufheizeinrichtung 23 mit einem Stellglied 26 z.B. in Form eines Pneumatikzylinders mit Kolbenstange verbunden. Das Pneumatikzylindergehäuse ist an die Tragplatte 11 und das freie Ende der Kolbenstange an die Aufheizeinrichtung 23 angeschlossen, so daß bei entsprechender Aktivierung des Stellgliedes 26 eine vertikal gerichtete Hub- oder Absenkbewegung der Aufheizeinrichtung 23 erfolgen kann.

Die Aufheizeinrichtung 23 enthält -- in ihrer Längsrichtung verlaufend -- vorzugsweise eine induktiv wirkende Hochfrequenzheizung, die im Betriebszustand erzeugte Wärme auf das Untertrum 22 des Transportbands 20 sowie auf den darunterliegenden oberen Bandlauf 34 eines weiteren metallischen Transportbandes 33 überträgt. Für eine gleichförmige Erwärmung bzw. Aufheizung des Untertrums 22 und des oberen Bandlaufes 34 ist wesentlich, daß die Aufheizeinrichtung 23 nicht nur zur Einstellung z.B. ihres Auflagedruckes auf der Innenseite des Untertrums 22 vertikal sondern auch in dessen Bewegungsrichtung, z. B. zu dessen Mittellinie hin, fluchtend oder gleichgerichtet einstellbar ist, was durch Veränderung der Längslage der Aufheizeinrichtung 23 zur Tragplatte 11 bewirkbar ist.

Die Druckeinrichtung 24 ist wie die Aufheizeinrichtung 23 über ein Stellglied 27 in Form beispielsweise eines Pneumatikzylinders mit Kolbenstange an der Tragplatte 11 in vertikaler Richtung verstellbar gelagert, um so unabhängig vom Auflagedruck der Aufheizeinrichtung 23 eine veränderbare Anpreßkraft der Druckeinrichtung 24 auf das Innere des Untertrums 22 zur Einflußnahme auf das Fließverhalten verschiedener Kunststoffe ausüben zu können.

Die vertikale Verstellbarkeit der Aufheizeinrichtung 23 und Druckeinrichtung 24 dient gesamthaft drei Zwecken. Einmal kann damit die Vorrichtung auf die Verarbeitung von Folien verschiedener Dicke eingestellt werden. Weiter sind über den Auflagedruck und die Temperatur und den Preßdruck material spezifische Werte einstellbar. Ferner dient die vertikale Verstellbarkeit dem Ausgleich von Dickenschwankungen der Kunststoffolien. Zu letzterem Zweck sind Meßfühler (nicht gezeigt) vorgesehen, welche die entsprechenden Werte abtasten und zur Verstellung der Stellglieder 26,27 weiterleiten.

Am unteren Ende der Tragplatte 11 steht die Kühleinrichtung 25 mit der Innenseite des Untertrums 22 in gleitendem Eingriff.

Im gewählten Ausführungsbeispiel besteht die Kühleinrichtung 25 aus drei Kühlblöcken 25ₐ, die in einer gemeinsamen Halterung an der Tragplatte 11 in vertikaler Richtung begrenzt bewegbar gelagert sind.

Zwischen der Halterung und der jeweiligen, dem Inneren des Untertrums 22 gegenüberliegenden Seite eines jeden Kühlblockes 25ₐ sind Druckfedern 28 vorgesehen, die eine Anpreßkraft in Richtung auf das Innere des Untertrums 22 ausüben, so daß zwecks gleichmäßigem Wärmeübergang vom Untertrum 22 auf die Kühleinrichtung 25 eine gesicherte Berührung gewährleistet ist.

Ist in Bewegungsrichtung x des Untertrums 22 in der Kühleinrichtung 25 ein steigender oder fallender Wärmeentzug erwünscht, so kann dies je Kühl block 25ₐ durch den Einbau von Druckfedern 28 mit entsprechend stärkeren oder schwächeren Federkräften bewerkstelligt werden.

Zur Beibehaltung einer gleichbleibenden Wärmeaufnahmefähigkeit werden die Kühlblöcke 25ₐ der Kühleinrichtung 25 mit einem wärmeaufnehmenden Medium -- vorzugsweise vermittels eines durch die Kühlblöcke 25ₐ geleiteten Wasserstromes oder Luft -- gekühlt. Durch Einstellen der Kühlmittelmenge pro Zeiteinheit kann die Wärmeaufnahmefähigkeit bzw. der Wärmeentzug, entsprechend schweißgutspezifischer Erfordernisse eingestellt werden.

Auch die Druckeinrichtung 24 ist nach Art der Kühleinrichtung 25 gekühlt, damit die Verpreßung etwa einer Schweißnaht einschließlich ihrer Vorerstarrung vor Eintritt in die Kühleinrichtung 25 während des Betriebes der erfindungsgemäßen Vorrichtung unter gleichbleibender Temperatur erfolgen kann.

Oberhalb der Aufheizeinrichtung 23, der Anpreßeinrichtung 24 und der Kühleinrichtung 25 ist an der Tragplatte 11 zumindest eine mittels Wasser gekühlte Kühlschiene 29 angeordnet, die mit der Innenseite des Obertrums 21 zusammenwirkt und diesen soweit abkühlt, daß er -- nach seiner Umlenkung um die Rollen 15 und 16 -- als Untertrum 22 mit einer stets gleichförmigen Temperatur in die Aufheizeinrichtung 23 einläuft.

Zwischen den Innenseiten vom Obertrum 21 und Untertrum 22 sind zwei auf die Trume einwirkende, frei drehende Einstellrollen 30 und 31 vorgesehen. Zwischen der Einstellrolle 31 und der Antriebsrolle 19 befindet sich eine frei drehende Spannrolle 32, die auf die Außenseite des Obertrums 21 einwirkt.

Bei nicht verstellbarer Achslage der Antriebsrolle 19 dienen die Einstellrollen 30, 31 und die Spannrolle 32 zum einen dem Zweck, bei Veränderung des vertikalen Abstandes H der Rolle 16 zur Lage des oberen Bandlaufes 34 des endlosen Transportbandes 33 den Parallellauf des Obertrums 21 auf den Kühlblöcken 29 und des Untertrums 22 auf der Aufheizeinrichtung 23, der Druckeinrichtung 24 und der Kühleinrichtung 25 einstellbar zu machen.

Zusätzlich zur Einstellung von Obertrum 21 und Untertrum 22 dienen die Rollen 19, 31 und 32 der Einstellung und Konstanthaltung der Spannung des Transportbandes 20. Die Einstellrollen 30 und 31 sind mittels Rollenhaltern 36 bzw. 37 an der Grundplatte 10 in gleichem Abstand wie die Rollen 15, 16 von der Grundplatte 10 beweglich gelagert. Jeder Rollenhalter 36 bzw. 37 trägt an einem freien Ende die entsprechende Einstellrolle 30 bzw. 31, während er andernends an einer festen Verankerung 38, 39 der Grundplatte 10 angebracht ist. Die Rollenhalter 36, 37 sind zu den Verankerungen 38, 39 verstellbar und schwenkbar ausgebildet, so daß der Abstand zwischen letzteren und der Achse der Einstellrollen 30, 31 verändert und diese in radial variierbarem Abstand um die Verankerungen bewegbar sind.

Die Spannrolle 32 ist an der Grundplatte 10 mittels eines aus zwei Schenkein 40, 41 bestehenden Kniehebels befestigt. Diese Schenkel 40, 41 begrenzen miteinander einen festen Öffnungswinkel und sind an ihrem Schnittpunkt um eine feste Verankerung 42 drehbar gelagert. Der eine Schenkel 40 trägt an seinem freien Ende die Spannrolle 32, während das freie Ende des Schenkels 41 mit einem pneumatischen oder hydraulischen Stellglied 43 verbunden ist, so daß bei Betätigung dessen die Spannrolle 32 um die Verankerung 42 zum Einstellen der Spannung des Transportbandes 20 bewegbar ist. Zur Konstanthaltung der Bandspannung dient ein Sensor 44, der die Spannung des Bandes und/oder auch dessen Temperatur aufnimmt und zur Regelung entsprechende Bewegungen des Stellgliedes 43 auslöst.

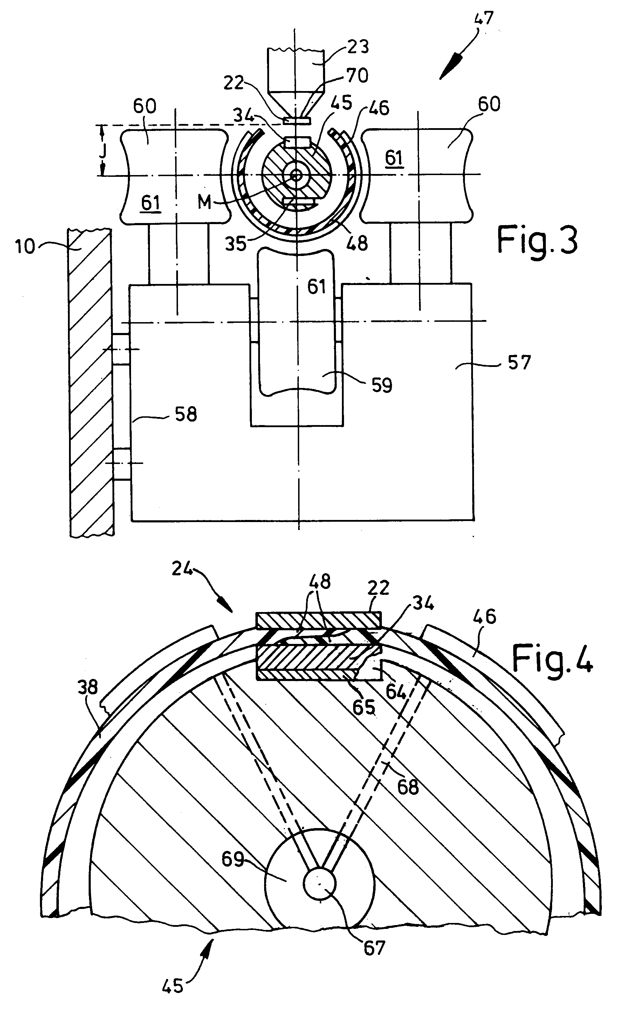

Der Teil der Vorrichtung, mit dem ein rohrförmiger Körper gebildet wird, umfaßt gemäß Fig. 2,3 einen Dorn 45, einen umlaufend angetriebenen Formriemen 46, der auf seiner dem Dorn 45 zugewandten Seite einen Kunststoff-Folienstreifen 48 trägt, und mehrere in Längsrichtung des Dornes 45 in Abstand zueinander angeordnete Formelemente 47, die den Formriemen 46 und den Folienstreifen 48 um den Umfang des Dornes 45 legen und dabei elastisch verformen.

Der im Querschnitt runde Dorn 45 ist an der Grundplatte 10 fest angeordnet und erstreckt sich gleichgerichtet sowie in Abstand zur Aufheizeinrichtung 23, Druckeinrichtung 24 und Kühleinrichtung 25 (Fig. 2). In die Oberseite des Dornes 45 ist eine Längsnut 64 eingeformt, in welcher der obere Bandlauf 34 des metallischen Transportbandes 33 läuft, das am vorderen Ende des Dornes 45 um eine Umlenkrolle 49 gleitet und als unterer Bandlauf 35 im Dorn 45 zurückgeführt wird. Die Längsnut 64 ist nach Fig. 3 bodenseitig mit einer Isolierung 65 zur Verhinderung der Abfuhr der im oberen Bandlauf 34 generierten Wärme versehen. Zwischen letzterem und dem Untertrum 22 des oberen metallischen Transportbandes 20 wird ein Spalt 70 gebildet, in dem -- in Fig. 4 zu sehende -- überlappende Ränder des Folienstreifens 48 zur Bildung einer in Längsrichtung verlaufenden Schweißnaht zunächst aufgeschmolzen, dann verpreßt und anschließend gekühlt werden.

Gemäß Fig. 1 läuft das Transportband 33 um eine an der Grundplatte 10 fest angeordnete Antriebsrolle 50, eine seine Innenseite berührende frei drehbare Spannrolle 51 und eine an seiner Außenseite angeordnete Einstellrolle 52, die den oberen Bandlauf 34 in die Längssnut 64 des Dornes 45 einleitet und in Zusammenwirken mit der Umlenkrolle 49 den horizontalen Gleichlauf zum Tiefsten der Längs- oder Führungsnut 64 gewährleistet. In Bandlaufrichtung folgen dann die in ihrer Achslage nicht verstellbare Umlenkrolle 49 und eine weitere Einstellrolle 53.

Die Spannrolle 51 sowie die Einstellrollen 52 und 53 sind --wie die Rollen 30, 31 und 32 -- an der Grundplatte 10 vorgesehen, wobei die Spannrolle 51 ebenfalls über einen Temperatur und/oder Bandspannung aufnehmenden Sensor 44ₐ und ein stellglied 55 die Bandspannung konstant hält. Damit wird es möglich, bei Verwendung verschiedener Dorndurchmesser den Abstand J zwischen Dornlängsachse M und Untertrum 22 unter Beibehaltung des Parallellaufes des Untertrums 22 zum oberen Bandlauf 34 und des unteren Bandlaufes 35 zum oberen Bandlauf 34 einzustellen.

Zur Erwärmung des Transportbandes 33 auf mindestens die Eintrittstemperatur des Untertrums 22 in die Aufheizeinrichtung 23 ist vor der Einstellrolle 52 eine Widerstandsheizung 56 vorzugsweise in Form einer Hochfrequenzspule vorgesehen.

Das erwähnte, den Dorn 45 aufnehmende Formelement 47 besteht nach Fig. 3 aus einem Trägerblock 57, der mit einer Seite 58 an der Grundplatte 10 befestigt ist. Im Trägerblock 57 ist unterhalb des Dornes 45 eine Formrolle 59 angeordnet, die um eine waagerechte Achse dreht, während zwei jeweils seitlich zum Dorn 45 angeordneten Formrollen 60 und 61 um senkrechte Achsen drehen, die exzentrisch zur Feineinstellung der Größe des Uberlappungsbereiches der Folienränder einstellbar sind.

Fig. 1 zeigt, daß mehrere der Formelemente 47 --gegebenenfalls mit gemeinsamem Trägerblock 57 --hintereinander geschaltet sind. Von dem in Laufrichtung des Untertrumes 22 ersten Formelement 47 ausgehend bis zu dem Formelement 47, das Ränder eines Folienstreifens 48 in Überlappung auf dem oberen Bandlauf 34 des Transportbandes 33 positioniert, nehmen die Abstände der waagrechten und senkrechten Drehachsen auf den Mittelpunkt des Dornes 45 hin ab, so daß die konkav geformten Laufflächen 61 der Formrollen 59, 60 zwischen ihnen und dem Dorn 45 laufenden Formriemen 46 mit aufliegenden Folienstreifen 48 in Längsrichtung um den Dorn 45 umlenken. Die Breite des Formriemens 46 ist geringer als die des aufliegenden Folienstreifens 48.

Ein Anlegen des Folienstreifens 48 an den Dorn 45 erfolgt nur soweit, daß sich die Ränder des Folienstreifens 48 zwischen dem Untertrum 22 des Transportbandes 20 und dem oberem Bandlauf 34 des Transportbandes 33 überlappen sowie von den Rändern des Formriemens 46 in dieser Lage gehalten werden, die innere Oberfläche des so gebildeten Tubenrohres zur Vermeidung von Reibungskräften an der äußeren Oberfläche des Dornes 45 jedoch nicht anliegt.

Dadurch wird bei Kunststoff-Monofolien -- eingeschlossen Laminate aus Kunststoff-Folien verschiedener chemischer Zusammensetzung -- ein Abreißen der in der Aufheizvorrichtung 23 aufgeschmolzenen Überlappung von dem angrenzend nicht aufgeschmolzenen Werkstoff der Rohrwandung verhindert, was eine gleichbleibend dichte und an ihren äußeren Rändern rißfreie Schweißnaht gewährleistet. Sobald die Schweißnaht durch Wärmeentzug eine vorbestimmte mechanische Festigkeit und Formbeständigkeit aufweist, nehmen die Achsabstände der Formrollen 59, 60 vom Mittelpunkt des Dornes 45 aus wieder zu, so daß sich der Formriemen 46 öffnet und mit Rohr nach Freigabe des Rohres vom Untertrum 22 und vom oberen Bandlauf 34 im wesentlichen in Längsrichtung zum Dorn 45 ablaufen kann.

Gemäß Fig. 1 wird der endlose vorzugsweise aus leicht umformbaren faserverstärktem Kunststoff bestehende Formriemen 46 über eine Antriebsrolle 62 angetrieben, über eine Bandspanneinrichtung 63 und um weitere Umlenkrollen geführt.

Die Antriebsrolle 62, die Bandspanneinrichtung 63 und die Umlenkrollen sind in derartig bemessenem Abstand an der Grundplatte 10 angeordnet, daß die Mittellinie des Formriemens 46 mit der senkrechten Mittellinie des Dornes 45 zusammenfällt, so daß sich die Kanten des Formriemens 46 bei Durchlauf durch die Formelemente 47 -- gegebenenfalls unterstützt durch eine Exzentereinstellung der Formrollen 60 -- stets in einer im wesentlichen waagerechten Ebene gegenüberliegen, wodurch ein in seiner Breite genau bemessener Überlappungsbereich gewährleistet ist.

Für die Erzeugung einer einwandfreien Schweißnaht an rohrförmigen Körpern aus Monokunststoff-Folien hat es sich insbesondere für deren Oberflächenausbildung und zur Vermeidung von Ausquetschungen aufgeschmolzenen Kunststoffes entlang den inneren und äußeren Rändern des Überlappungsbereiches sowie zur Vermeidung von Spannungen und Dehnungen in und an den Rändern der Schweißnaht als vorteilhaft erwiesen, die Transportbänder 20 und 33 sowie den Formriemen 46 in gleicher Umlaufgeschwindigkeit anzutreiben, also keine Relativbewegung zwischen Untertrum 22 und überlappenden Rändern des Folienstreifens 48 einerseits, den überlappenden Rändern des Folienstreifens 48 und dem oberen Bandlauf 34 anderseits sowie darüberhinaus zwischen dem Formriemen 46 und dem darauf aufliegenden Folienstreifen 48 besteht, wodurch die überlappenden Folienränder zwischen den laufenden Transportbändern 20 und 33 in Ruhelage aufgeschmolzen, verpreßt, vorerstarrt und abgekühlt werden.

Zu diesem Zweck werden die Antriebsrollen 19, 50 und 62 in ihrer Antriebsdrehzahl aufeinander abgestimmt gesteuert, und die Bandspanneinrichtung 63 sowie die Spannrollen 32 und 51 werden in ihrer Einstellposition so aktiviert, daß die Transportbänder 20, 33 und der Formriemen 46 unter gleichbleibend vorbestimmter Spannung stehen.

Mit der erfindungsgemäßen Vorrichtung wird ein aus ein- oder mehrschichtiger Kunststoff-Folie ohne metallische Sperrschicht gebildeter rohrförmiger Körper folgendermaßen hergestellt.

An einer Auflaufstelle A läuft der Folienstreifen 48 flach auf den ebenfalls flach laufenden Formriemen 46 auf und wird -- flach liegend -- von Formriemen 46 zu den Formelementen 47 getragen. Oberhalb des Folienstreifens 48 befindet sich der Dorn 45. In den Formelementen 47 wird der Formriemen 46 mit aufliegenden Folienstreifen 48 über die Formrollen 59, 60 querschnittlich im wesentlichen kreisförmig mit abnehmendem Durchmesser um den Dorn 45 geformt, bis die Ränder des Folienstreifens 48 einen in seiner Größe vorbestimmten Überlappungsbereich gebildet haben. Die Breite des Formriemens 46 ist so bemessen, daß nach Bildung des Überlappungsbereiches die einander gegenüberliegenden Kanten des Formriemens 46 den Überlappungsbereich zur nachfolgenden Bearbeitung nicht überdecken, sondern zwischen sich einen in Längsrichtung des Tubenrohres verlaufenden Spalt bilden, in dem der Überlappungsbereich freiliegt.

Zur Feineinstellung der Bemessung des Überlappungsbereiches können die Formrollen 60 dank ihrer Exzenterlage so eingestellt werden, daß die freien Kanten des Formriemens 46 die Kanten des Folienstreifens 48 mehr oder weniger gegeneinander verschieben, wodurch ein in seiner Breite bestimmbarer Überlappungsbereich entsteht. Nach Bildung dieses Überlappungsbereiches liegt dieser dem oberen Bandlauf 34 auf, der auf der Oberfläche des Dornes 45 in einer Längsnut 64 geführt ist.

Das Formen des Folienstreifens 48 und des Formriemens 46 erfolgt derart, daß nur der Überlappungsbereich auf dem oberen Bandlauf 34 aufliegt, ansonsten aber zur Vermeidung einer Reibung zwischen stationärem Dorn 45 und transportiertem Folienstreifen 48 keine Berührung zwischen Folienstreifen 48 und Dorn 45 stattfindet.

Zur Aufrechterhaltung einer bestimmten Betriebstemperatur ist der Dorn 45 mit einem in seinem Inneren angeordneten Kanal 69 versehen, der von einem Kühlmedium durchflossen wird. Gleichermaßen ist im Inneren eine Luftleiteinrichtung aus einer in Längsrichtung des Dornes 45 laufenden Bohrung 67 angebracht, von der im Bereich der Druckeinrichtung 24 in Richtung auf die Umlenkrolle 49 bis zum Ende des Dornes 45 Radialbohrungen 68 ausgehen, die am Umfang des Dornes 45 ausmünden und Luft zu Kühlzwecken, Verminderung der Reibung und zur Kalibrierung des Rohrdurchmessers in den Raum zwischen Dornoberfläche und innerer Wandung des Rohres fördern.

Nach Bildung des Überlappungsbereiches läuft letzterer zwischen die Transportbänder 20, 33 ein.

Das Untertrum 22 des Transportbandes 20 steht mit seiner Innenseite mit der Aufheizeinrichtung 23 in Berührung, welche die metallischen Transportbänder 20 und 33 durch Hochfrequenzinduktion auf eine Temperatur aufheizt die ausreicht, den Kunststoff auf eine für die Verschweißung unter Druck notwendige Temperatur zu bringen.

Nach Abschluß der Aufheizung unterläuft der erschmolzene Überlappungsbereich die Druckeinrichtung 24, die auf die Innenseite des Untertrums 22 einwirkt, den Überlappungsbereich verpreßt und gleichzeitig so abkühlt, daß er in seiner Gestaltung vorerstarrt in die sich anschließende Kühleinrichtung 25 einläuft. In dieser wird dem Überlappungsbereich über das Untertrum 22 die für seine mechanische Festigkeit notwendige Restwärme entzogen.

Nachdem der Uberlappungsbereich eine bestimmte mechanische Festigkeit erreicht hat, öffnet sich der Formriemen 46 dadurch, daß die Achsabstände der Formrollen 59, 60 zum Umfang des Dornes 45 zunehmen, so daß das verschweißte Tubenrohr vom Dorn 45 zur weiteren Bearbeitung frei ablaufen kann.

Zur Herstellung spannungs- und rißfreier Schweißnähte für Rohrkörper aus Kunststoff-Folien ist wesentlich, daß keine Relativbewegungen während des Bildungsvorganges der Schweißnaht zwischen den Oberflächen des Überlappungsbereiches den mit den Oberflächen zusammenwirkenden Bandläufen und zwischen Folienstreifen 48 und Formriemen 46 stattfindet. Dazu werden die metallischen Transportbänder 20, 33 und der Formriemen 46 mit gleicher Geschwindigkeit angetrieben und unter konstant gleichförmiger Spannung gehalten, um wärmebedingte Ausdehnungen und damit individuelle Geschwindigkeitsänderungen auszuschalten.

## Patentansprüche

1. Vorrichtung zur Herstellung von Rohrkörpern, insbesondere für Verpackungstuben aus einem aus schweissbarem Kunststoff bestehendem Folienband (48), dessen Längskanten thermisch miteinander verbunden sind, mit einem mit Formrollen (59,60) zusammenwirkenden Formriemen (46), der das Folienband (48) um einen Dorn (45) zu einem Rohrkörper formt, einem unteren im Dorn (45) laufenden Transportband (33) und einem oberen Transportband (20), zwischen denen die Längskanten des Folienbandes (48) einander überlappend aufgenommen sind, einer auf das obere Transportband (20) einwirkenden Heizeinrichtung (23) und Kühleinrichtung (25), dadurch gekennzeichnet, dass in Bewegungsrichtung des oberen Transportbandes (20) die Heizeinrichtung (23), eine auf das obere Transportband (20) einwirkende Druckeinrichtung (24) und die Kühleinrichtung (25) nacheinander angeordnet sind, wobei das obere Transportband (20) als ein endloses, die Heizeinrichtung (23), die Druckeinrichtung (24) und die Kühleinrichtung (25) unterfahrendes Band, die Heizeinrichtung (23) als eine auf das obere Transportband (20) und das untere Transportband (33) wirkende Hochfrequenzheizung ausgebildet und das obere Transportband (20), das untere Transportband (33) und der Formriemen (46) mit gleicher Geschwindigkeit umlaufend angetrieben sind.

2. Vorrichtung nach Anspruch 1, dadurch gekennzeichnet, daß die Aufheizeinrichtung zur Laufrichtung des Transportbandes (20) in vertikaler Richtung verstellbar ist, wobei gegebenenfalls die vertikale Verstellung mittels pneumatisch oder hydraulisch aktivierbarer Stellglieder (12) erfolgt.

3. Vorrichtung nach einem der Ansprüche 1 oder 2, dadurch gekennzeichnet, daß die Längsachse der schienenförmig ausgebildeten Aufheizeinrichtung (23) zur Längsachse des Transportbandes (20) einstellbar ist, und/oder, daß die Druckeinrichtung (24) zur Laufrichtung des Transportbandes (20) in vertikaler Richtung verstellbar ist, wobei gegebenenfalls die Druckeinrichtung (24) schienenförmig ausgebildet ist.

4. Vorrichtung nach einen der Ansprüche 1 bis 3, dadurch gekennzeichnet, daß die Druckeinrichtung (25) vermittels eines wärmeaufnehmenden Mediums, vorzugsweise Wasser, gekühlt ist, und/oder, daß die Kühleinrichtung (25) mittels Federn (28) unter Vorspannung mit dem Transportband (20) in Eingriff steht.

5. Vorrichtung nach einem der Ansprüche 1 bis 4, dadurch gekennzeichnet, daß die Kühleinrichtung (25) aus mehreren in Laufrichtung des Transportbandes (20) hintereinander angeordneten Kühlblöcken (25ₐ) besteht, wobei letztere gegebenenfalls unter unterschiedlicher Federvorspannung mit dem Transportband (20) in Eingriff stehen und/oder, daß das Transportband (20) mit einer oder mehreren den Kühlblöcken (25ₐ) nachgeordneten Kühlschiene/n (29) in Eingriff steht.

6. Vorrichtung nach einem der Ansprüche 1 bis 5, dadurch gekennzeichnet, daß Aufheizeinrichtung (23), Druckeinrichtung (24) und Kühleinrichtung (25) sowie gegebenenfalls die Kühlschienen (29) auf einer gegenüber dem Dorn (45) vertikal bewegbaren Tragplatte (11) angeordnet sind.

7. Vorrichtung nach einem der Ansprüche 1 bis 6, dadurch gekennzeichnet, daß das obere einteilige Transportband (20) und das untere einteilige Transportband (33) mit Bandspannungen ermittelnden und diese selbsttätig auf vorgegebene Werte einstellenden Bandspannungseinrichtungen in Eingriff stehen.

8. Vorrichtung nach Anspruch 1 oder 7, dadurch gekennzeichnet, daß die Bandspanneinrichtung des oberen Transportbandes (20) aus einer verstellbar gelagerten, mit der Innenseite seines Obertrums in Eingriff stehenden Einstellrolle (31) einem um eine Verankerung (42) schwenkbar gelagerten Knienebel (40,41) mit einer an einem ersten freien Ende drehbar angeordneten, mit der Außenseite des Obertrums (21) des Transportbandes (20) in Eingriff stehenden Spannrolle (32) und aus einem an dem zweiten freien Ende des Kniehebels (40,41) angeordneten Stellglied (43) besteht.

9. Vorrichtung nach Anspruch 7 oder 8, dadurch gekennzeichnet, daß der Kniehebel (40,41) zur Schwenkbewegung der Spannrolle (32) vermittels eines pneumatisch oder hydraulisch aktivierbaren Stellgliedes (43) verbunden ist, wobei gegebenenfalls im Bereich der Spannrolle (32) ein die Spannung des Transportbandes (20) ermittelnder, das Stellglied (43) steuernder Sensor (44) vorgesehen ist.

10. Vorrichtung nach einem der Ansprüche 7 bis 9, dadurch gekennzeichnet, daß der obere Bandlauf (34) des unteren Transportbandes (33) an seiner Innenseite mit einer Einstellrolle (51) und an seiner Außenseite mit einer Einstellrolle (52) in Eingriff steht, wobei die Einstellrolle (51) um eine Verankerung schwenkbar gehalten ist, und/oder, daß der Kniehebel zur Schwenkbewegung der Einstellrolle (51) vermittels eines pneumatisch oder hydraulisch aktivierbaren Stellgliedes (55) bewegbar ist, wobei gegebenenfalls im Bereich der Einstellrolle (51) ein die Spannung des Transportbandes (33) ermittelnder und den Kniehebel über das Stellglied (55) steuernder Sensor (44ₐ) vorgesehen ist.

11. Vorrichtung nach einem der Ansprüche 7 bis 10, dadurch gekennzeichnet, daß das Transportband (20) um eine an der Grundplatte (10) angeordnete Antriebsrolle (19) und zwei an der Tragplatte (11) angeordnete, gegebenenfalls mit der Tragplatte (11) in vertikaler Richtung verstellbare Umlenkrollen (15,16) geführt ist, wobei der Durchmesser (d) der Antriebsrolle (19) zur Bildung des Parallellaufes des Obertrums (21) und des Untertrums (22) des Transportbandes (20) dem Achsabstand der Umlenkrollen (15,16) zuzüglich der Summe deren halben Durchmesser entspricht.

12. Vorrichtung nach einem der vorangehenden Ansprüche 1 bis 11, dadurch gekennzeichnet, daß zwischen der Kühleinrichtung (25) und der Antriebsrolle (19) ein auf der Innenseite des Untertrums (22) des Transportbandes (20) angreifende Einstellrolle vorgesehen ist, und/oder, daß das untere endlose Transportband (33) um eine an der Grundplatte (10) angeordnete Antriebsrolle (50) an der Grundplatte (10) angeordneten verstellbaren Umlenkrollen (53,52) an der Oberfläche des Dornes (45) in einer Nut (64), deren Boden gegebenenfalls mit einer Isolierung versehen ist, am freien Ende des Dorns (45) um eine Umlenkrolle (49) umgelenkt und von dort im Inneren des Dornes (45) in einer Ausnehmung (66) geführt ist.

13. Vorrichtung nach einem der vorangehenden Ansprüche 1 bis 12, dadurch gekennzeichnet, daß an der Grundplatte (10) angeordnete Trägerblöcke (57) zumindest um eine horizontal verlaufende Achse drehbar gelagerte Formrolle (59) und wenigstens ein Paar von einander gegenüberliegenden, jeweils um vertikal verlaufende Achsen drehbar gelagerten Formrollen (60) aufweisen, wobei die Umfangsflächen der Formrollen (59,60) konkav ausgebildet sind.

14. Vorrichtung nach einem der Ansprüche 1 bis 13, dadurch gekennzeichnet, daß der endlos umlaufende Formriemen (46) mit einer Bandspanneinrichtung (63) zur Konstanthaltung einer gleichbleibend vorbestimmten Bandspannung zusammenwirkt und in seiner Umlaufgeschwindigkeit auf die Umlaufgeschwindigkeit der Transportbänder abgestimmt synchron angetrieben ist, wobei gegebenenfalls letztere und der Formriemen (46) mit gleicher Geschwindigkeit umlaufen.

15. Verfahren zur Herstellung von Rohrkörpern, insbesondere für Verpackungstuben aus einem aus schweissbarem Kunststoff bestehenden Folienband (48), dessen Längskanten thermisch miteinander verbunden sind, bei dem das Folienband (48) zur Bildung einer Schweissnaht in seiner Längsrichtung vermittels eines mit Formrollen (59, 60) zusammenwirkenden Formriemens (46) um einen Dorn (45) zu einem Rohr mit einer aus den Folienrändern gebildeten Ueberlappung geformt, die Ueberlappung in einen aus einem oberen (20) beheizten und nachfolgend gekühlten und einem unteren (45) Transportband gebildeten Bandspalt eingebracht, darin aufgeschmolzen und verpresst wird,
dadurch gekennzeichnet, dass zur Bildung der Schweissnaht die Ueberlappung von den vermittels Hochfrequenz aufgeheizten Transportbändern (20,33) nacheinander aufgeschmolzen unter Anwendung von Druck auf das obere Transportband (20) verpresst und anschliessend gekühlt wird, die Bildung der Schweissnaht in Ruhelage der Ueberlappung zwischen den Transportbändern (20,33) und des Rohrkörpers auf dem Formriemen (46), durch gleiche Umlaufgeschwindigkeit der Transportbänder (20,33) und des Formriemens (46) erfolgt, wobei fliessfähige Phasen des aufgeschmolzenen Kunststoffes der Ueberlappung vor Verpressung zur Vorerstarrung gebracht werden.

16. Verfahren nach Anspruch 15, dadurch gekennzeichnet, daß durch eine mit einem Transportband zusammenwirkende Kühleinrichtung der Überlappung unter Druck die zur Vollerstarrung notwendige Restwärmemenge entzogen wird, wobei gegebenenfalls der Entzug der Restwärmemenge unter einstellbarer Druckbelastung erfolgt.

17. Verfahren nach einem der Ansprüche 15 oder 16, dadurch gekennzeichnet, daß im Bereich der Druckeinrichtung die innere Rohrwandung gekühlt wird, und/oder daß im Bereich der Kühleinrichtung die innere Rohrwandung gekühlt wird, und/oder daß im Bereich der Druckeinrichtung und Kühleinrichtung die innere Rohrwandung gekühlt wird.

## Claims

1. Apparatus for the production of tubular bodies, in particular for packaging tubes, from a foil strip (48) comprising weldable plastic material and whose longitudinal edges are thermally joined together, comprising a shaping belt (46) which cooperates with shaping rollers (59, 60) and which shapes the foil strip (48) around a mandrel (45) into the form of a tubular body, a lower driven transportations belt (33) which runs in the mandrel (45) and an upper driven transportation belt (20) the longitudinal edges of the foil strip (48) being accomodated in mutually overlapping relationship between the transportation belts (33, 20) a heating means (23) and a cooling means (25) acting upon the upper transportation belt (20) characterised in that in direction of movement of the upper transportation belt (20) one another following are arranged the heating (23) a pressing means (24) acting upon the upper transportation belt (20) and a cooling means (25), whereby the upper transportation belt (20) is in the form of an edless belt which passes beneath the heating means (23), pressing means (24) and cooling means (25) and the heating means (23) is in the form of an inductively operating high frequency heating means acting upon the upper transportation belt (20) and lower transportation belt (33) and the upper transportation belt (20), the lower transportation belt (33) and the shaping belt (46) are rotatively driven with uniform speed.

2. Apparatus according to claim 1 characterised in that the heating means is displaceable in a vertical direction with respect to possibly vertical displacement is effected by means of pneumatically or hydraulically activatable control members (12).

3. Apparatus according to one of claims 1 or 2 characterised in that the longitudinal axis of the heating means (23) which is of a bar-like configuration belt (20) and/or that the pressing means (24) is displeabale in a vertical direction relative to the direction of movement of the transportation belt (20), wherein the pressing means (24) is possibly of a bar-like configuration.

4. Apparauts according to one of claims 1 to 3 characterised in that the pressing means (25) is cooled by means of a heat-absorbing medium, preferably water, and / or that the cooling means (25) is in engagement with the transportation belt (20) under a prestressing by means of springs (28).

5. Appartus according to one of claims 1 to 4 characterised in that the cooling means (25) comprises a plurality of cooling blocks (25a) which are arranged in succession in the direction of movement of the transportation belt (20), wherein the cooling blocks are possibly in engagement with the transportation belt (20) under different degrees of spring prestressing, and / or that the transportation belt (20) is in engagement with one or more cooling bars (29) arranged downstream of the cooling blocks (25a).

6. Apparatus according to one of claims 1 to 5 characterised in that the heating means (23), pressing means (24) and cooling means (25) and possibly the cooling bars (29) are arranged on a carrier plate (11) which is movable vertically with respect to the mandrel (45).

7. Apparatus according to one of claims 1 to 6 characterised in that the upper one-piece transportation belt and the lower one-piece transportation belt are in engagement with belt tensioning devices which provide for belt tensioning effects and which automatically adjust them to predetermined values.

8. Apparatus according to claim 1 or claim 7 characterised in that the belt tensioning device of the upper transportation belt (20) comprises a displaceably mounted adjustin roller (31) which is in engagement with the inward side of the upper run of belt, an elbow lever (40, 41) which is mounted pivotably about an anchorage (42), with a tensioning roller (32) which is arranged rotatably at a first free end and which is in engagement with the outward side of the upper run (21) of the transportation belt, and a control member (43) arranged at the second free end of the elbow lever (40, 41).

9. Apparatus according to claim 7 or claim 8 characterised in that the elbow lever (40,41) ist connected to a pneumatically or hydraulically activatable control member (43) for producing pivotal movement of the tensioning roller (32), wherein possibly provided in the region of the tensioning roller (32) is a sensor (44) which detects the tension of the transportation belt (20) and which controls the control member (43).

10. Apparatus according one of claims 7 to 9 characterised in that the upper belt run (34) of the lower transportation belt (33) is in engagement at its inward side with an adjusting roller (51) and at its outward side with an adjusting roller (52), the adjusting roller (51) being mounted pivotably about an anchorage, and / or that the elbow lever for pivotal movement of the adjusting roller (51) is movable by means of a pneumatically or hydraulically activatable control member (55), where possibly arranged in the region of the adjusting roller (51) is a sensor (44a) which detects the tension of the transportation belt (33) and controls the elbow lever by way of the control member (55).

11. Apparatus according to one of claims 7 to 10 characterised in that the transportation belt (20) is guided around a drive roller (19) arranged on the base plate (10) and two direction changing rollers (15, 16) which are arranged on the carrier plate (11) and which are possibly displaceable with the carrier plate (11) in a vertical direction, wherein the diameter (d) of the drive roller (19) corresponds to the spacing between the axes of the direction-changing rollers (15, 16) plus the sum of half the diameters thereof, thereby to form the parallel relationship of the upper run (21) and the lower run (22) of the transportation belt (20).

12. Apparatus according to one of the preceding claims 1 to 11 characterised in that provided between the cooling means (25) and the drive roller (15) is an adjusting roller which acts on the inward side of the lower run (22) of the transportation belt (20), and / or that the lower endless transportation belt (33) is guided around a drive roller (50) arranged on the base plate (10), displaceable direction-changing rollers (53, 52) which are disposed on the base plate (10), at the surface of the mandrel (45) in a groove (64), the bottom of which is possibly provided with an insulation, at the free end of the mandrel (45) around a direction-changing roller (49) and from there is guided in the interior of the mandrel (45) in a recess (66).

13. Apparatus according to one of the preceding claims 1 to 12 characterised in that carrier blocks (57) arranged on the base plate (10) have at least one shaping roller (59) which is mounted rotatably about a horizontally extending axis, and at least one pair of mutually oppositely disposed shaping rollers (60) which are each mounted rotatably about respective vertically extending axes, wherein the peripheral surfaces of the shaping rollers (59, 60) are of a concave configuration.

14. Apparatus according to one of claims 1 to 13 characterised in that the endlessly circulating shaping belt (46) cooperates with a belt tensioning means (63) to maintain an uniformly predetermined belt tension and is driven in regard to its speed of rotation in synchronously matched relationship with the speed of rotation of the transportation belts, wherein possibly the latter and the shaping belt (46) circulate at the same speed.

15. A process for the production of tubular bodies in particular for packaging tubes from a foilstrip (48) comprising weldable plastic material and whose longitudinal edges are thermally joined together in which the foil strip (48) for forming of a welding seam in its longitudinal direction is shaped around a mandrel (45) to form a tube with an overlap formed of the foil edges by means of shaping rollers (59, 60) cooperating with a shaping belt (46), the overlap being introduced into a belt gap formed by an upper transportation belt (20) which is heated and thereafter cooled and a lower transportation belt (45) therein being heated and pressed characterised in that for formation of a welding seam the overlap is melted by means of transportation belts (20, 33) heated by high frequency heating means, thereafter being pressed by application of pressure upon the upper transportation belt (20) and thereafter following being cooled the formation of the welding seam is effected in steady position of the overlap between the transportation belts (20, 33) and of the tubular body upon the forming belt (46) attained by even rotational speeds of the transportation belts (20, 33) and the forming belt (46) and wherein phases of the molten plastic capable of flow of the overlap are subjected to preliminary hardening prior to pressing.

16. A process according to claim 15 characterised in that a cooling means which cooperates with a transportation belt removes from the overlap, under pressure, the residual amount of heat required for total hardening, wherein possibly the removal of the residual amount of heat is effected under an adjustable pressure loading.

17. A process according to one of claims 15 to 16 characterised in that the inner wall of the tube is cooled in the region of the pressing means, and / or that the inner wall of the tube is cooled in the region of the cooling means, and / or that the inner wall of the tube is cooled in the region of the pressing means and the cooling means.

## Revendications

1. Dispositif pour la fabrication de corps formant tuyaux, en particulier pour des tuyaux d'emballage à partir d'une bande de feuille (48) constituée de plastique soudable, bande dont les arêtes longitudinales sont couplées thermiquement entre elles, comportant une courroie de formage (46) agissant conjointement avec des galets de formage (59, 60), qui forme la bande de feuille (48) autour d'un mandrin (45) en un corps formant tuyau, une bande transporteuse (33) inférieure passant dans le mandrin (45) et une bande transporteuse (20) supérieure, entre lesquelles les arêtes longitudinales de la bande de feuille (48) sont réceptionnées en se chevauchant, un appareil de chauffage (23) agissant sur la bande transporteuse (20) supérieure et un dispositif de refroidissement (25), caractérisé en ce que l'appareil de chauffage (23), un appareil de pression (24) agissant sur la bande transporteuse (20) supérieure et l'appareil de refroidissement (25) sont disposés successivement dans le sens de déplacement de la bande transporteuse (20) supérieure, la bande transporteuse (20) supérieure se présentant sous la forme d'une bande en continu passant sous l'appareil de chauffage (23), l'appareil de pression (24) et l'appareil de refroidissement (25), et l'appareil de chauffage (23) sous la forme d'un appareil à haute fréquence agissant sur la bande transporteuse (20) supérieure et la bande transporteuse (33) inférieure, et la bande transporteuse (20) supérieure, la bande transporteuse (33) inférieure et la courroie de formage (46) étant entraînées de façon rotative à la même vitesse.

2. Dispositif selon la revendication 1, caractérisé en ce que l'appareil de chauffage peut être déplacé dans le sens vertical par rapport au sens de marche de la bande transporteuse (20), le déplacement vertical s'effectuant éventuellement au moyen d'actionneurs (12) à commande pneumatique ou hydraulique.

3. Dispositif selon l'une quelconque des revendications 1 ou 2, caractérisé en ce que l'axe longitudinal de l'appareil de chauffage (23), conçu en forme de rail, peut être réglé par rapport à l'axe longitudinal de la bande transporteuse (20), et/ou en ce que l'appareil de pression (24) peut être réglé dans le sens vertical par rapport au sens de marche de la bande transporteuse (20), l'appareil de pression (24) étant réalisé éventuellement sous la forme de rail.

4. Dispositif selon l'une quelconque des revendications 1 à 3, caractérisé en ce que l'appareil de pression (24) est refroidi au moyen d'un agent récepteur de chaleur, de préférence de l'eau, et/ou en ce que l'appareil de refroidissement (25) est en prise avec la bande transporteuse (20) au moyen de ressorts (28) sous prétension.

5. Dispositif selon l'une quelconque des revendications 1à 4, caractérisé en ce que l'appareil de refroidissement (25) comprend plusieurs blocs de refroidissement (25ₐ) disposés successivement dans le sens de marche de la bande transporteuse (20), ces derniers étant en prise éventuellement avec la bande transporteuse (20) avec une prétension de ressort différente et/ou en ce que la bande transporteuse (20) est en prise avec un ou plusieurs rails(s) de refroidissement (29) disposés après les bloc de refroidissement (25ₐ).

6. Dispositif selon l'une quelconque des revendications 1 à 5, caractérisé en ce que l'appareil de chauffage (23), l'appareil de pression (24) et l'appareil de refroidissement (25) ainsi qu'éventuellement les rails de refroidissement (29) sont disposés sur une plaque porteuse (11) mobile dans le sens vertical par rapport au mandrin (45).

7. Dispositif selon l'une quelconque des revendications 1à 6, caractérisé en ce que la bande transporteuse (20) supérieure d'une seule pièce et la bande transporteuse (33) inférieure d'une seule pièce sont en prise avec les appareils de tension de bande qui calculent les tensions de bandes et les règlent automatiquement sur des valeurs prédéfinies.

8. Dispositif selon la revendication 1 ou 7, caractérisé en ce que l'appareil de tension de bande de la bande transporteuse (20) supérieure comprend un galet de réglage (31) logé de façon mobile et en prise avec la face intérieure de son brin supérieur, un levier à genouillère (40, 41) monté de façon pivotante autour d'un ancrage (42) avec un galet tendeur (32) logé de façon pivotante sur une première extrémité libre et en prise avec la face extérieure du brin supérieur (21) de la bande transporteuse (20), et un actionneur (43) disposé sur la deuxième extrémité libre du levier à genouillère (40, 41).

9. Dispositif selon la revendication 7 ou 8, caractérisé en ce que le levier à genouillère (40, 41) pour le mouvement de pivotement du galet tendeur (32) est relié au moyen d'un actionneur (43) à commande pneumatique ou hydraulique, un capteur (44) déterminant la tension de la bande transporteuse (20) et commandant l'actionneur (43) étant éventuellement prévu dans la zone du galet tendeur (32).

10. Dispositif selon l'une quelconque des revendications 7 à 9, caractérisé en ce que le passage de bande (34) supérieur de la bande transporteuse (33) inférieure est en prise avec un galet de réglage (51) sur sa face intérieure et avec un galet de réglage (52) sur sa face extérieure, le galet de réglage (51) étant logé de façon pivotante autour d'un ancrage, et/ou en ce que le levier à genouillère peut être déplacé pour le mouvement de pivotement du galet de réglage (51) au moyen d'un actionneur (55) à commande pneumatique ou hydraulique, un capteur (44ₐ) déterminant la tension de la bande transporteuse (33) et commandant le levier à genouillère par l'intermédiaire de l'actionneur (55) étant prévu éventuellement dans la zone du galet de réglage (51).

11. Dispositif selon l'une quelconque des revendications 7 à 10, caractérisé en ce que la bande transporteuse (20) est guidée autour d'un galet d'entraînement (19) disposé sur la plaque de base (10) et de deux galets de renvoi (15, 16) disposés sur la plaque support (11) et éventuellement déplaçables avec la plaque support (11) dans le sens vertical, le diamètre (d) du galet d'entraînement (19) pour établir la marche en parallèle du brin supérieur (21) et du brin inférieur (22) de la bande transporteuse (20) correspondant à l'entraxe des galets de renvoi (15, 16) plus la somme de leur demi diamètre.

12. Dispositif selon l'une quelconque des revendications 1 à 11 précédentes, caractérisé en qu'il est prévu un galet de réglage en prise sur la face intérieure du brin inférieur (22) de la bande transporteuse (20) entre l'appareil de refroidissement (25) et le galet d'entraînement (19), et/ou en ce que la bande transporteuse (33) inférieure en continu est renvoyée autour d'un galet d'entraînement (50) disposé sur la plaque de base (10), des galets de renvoi (53, 52) réglables disposés sur la plaque de base (10) à la surface du mandrin (45) dans une rainure (64), dont le fond est pourvu éventuellement d'une isolation, autour d'un galet de renvoi (49) sur l'extrémité libre mandrin (45) et à partir de là, est guidé à l'intérieur du mandrin (45) dans un évidement (66).

13. Dispositif selon l'une quelconque des revendications 1 à 12 précédentes, caractérisé en ce que des blocs supports (57) disposés sur la plaque de base (10) présentent au moins un galet de formage (59) logé de façon pivotante autour d'un axe placé horizontalement et au moins une paire de galets de formage (60) se faisant face et logés de façon pivotante respectivement autour d'axes passant verticalement, les surfaces périphériques des galets de formage (59, 60) étant de conception concave.

14. Dispositif selon l'une quelconque des revendications 1 à 13, caractérisé en ce que la courroie de formage (46) tournant en continu agit conjointement avec un appareil de tension de bande (63) pour maintenir constante une tension de bande régulière prédéfinie et est entraînée de façon synchrone dans sa vitesse périphérique en phase avec la vitesse périphérique des bandes transporteuses, ces dernières et la courroie de formage (46) tournant éventuellement avec la même vitesse.

15. Procédé pour la fabrication de corps formant tuyaux, en particulier pour des tuyaux d'emballage à partir d'une bande de feuille (48) composée de plastique soudable, dont les arêtes longitudinales sont couplées entre elles thermiquement, avec lequel la bande de feuille (48) est formée pour constituer une soudure dans son sens longitudinal au moyen d'une courroie de formage (46) agissant conjointement avec des galets de formage (59, 60) autour d'un mandrin (45) pour devenir un tuyau avec un recouvrement constitué des bords de la feuille, le recouvrement étant introduit dans une fente de la bande formée d'une bande transporteuse supérieure (20) chauffée et ensuite refroidie et d'une bande transporteuse inférieure (45), fondu dedans et compressé, caractérisé en ce que, pour former la soudure, le recouvrement des bandes transporteuses (20, 33) réchauffées par haute fréquence et fondues successivement, est compressé en appliquant de la pression sur la bande transporteuse (20) supérieure et ensuite refroidi, la formation de la soudure s'effectuant dans la position de repos du recouvrement entre les bandes transporteuses (20, 33) et du corps formant tuyau sur la courroie de formage (46), au moyen d'une vitesse de rotation identique des bandes transporteuses (20, 33) et de la courroie de formage (46), des phases fluides du plastique fondu du recouvrement étant amenées avant la compression à la solidification initiale.

16. Procédé selon la revendication 15, caractérisé en ce que la quantité de chaleur résiduelle nécessaire pour la solidification complète est retirée sous pression au moyen d'un appareil de refroidissement du recouvrement, agissant conjointement avec une bande transporteuse, la soustraction de la quantité de chaleur résiduelle s'effectuant éventuellement avec une charge de pression réglable.

17. Procédé selon l'une quelconque des revendications 15 ou 16, caractérisé en ce que la paroi intérieure du tube est refroidie dans la zone de l'appareil de pression et/ou en ce que la paroi intérieure du tube est refroidie dans la zone de l'appareil de refroidissement et/ou en ce que la paroi intérieure est refroidie dans la zone de l'appareil de pression et de l'appareil de refroidissement.
